# EUROPEAN PATENT APPLICATION

(11) **EP 1 489 829 A2**
(43) Date of publication of application: **22.12.2004**
(21) Application number: 04253570.8
(22) Date of filing: 15.06.2004
(51) Int. Cl.: H04N 1/21

(54) **Image display method, program for executing the method, and image display device**

(30) Priority: 20.06.2003 JP 2003176855
(71) Applicant: CANON KABUSHIKI KAISHA, Ohta-ku, Tokyo (JP)
(72) Inventor: Aratani, Shuntaro c/o Canon Kabushiki Kaisha, Tokyo (JP); Miyamoto, Katsuhiro c/o Canon Kabushiki Kaisha, Tokyo (JP); Ohno, Tomoyuki c/o Canon Kabushiki Kaisha, Tokyo (JP)
(74) Representative: Beresford, Keith Denis Lewis

(57) **Abstract**

An image display device obtains photographic information associated with image data. The image display device selects a display mode of the image data on the basis of the photographic information obtained, and changes the display of the image data in accordance with the display mode selected.

## Description

### BACKGROUND OF THE INVENTION

### 1. Field of the Invention

The present invention relates to an image display method for displaying image data on a screen, a program for executing the method, and an image display device.

### 2. Description of the Related Art

Thedigitalhigh-vision broadcasting has been started, and the high-vision television receivers have spread to enable homes to enjoy more impressive images of higher qualities than the conventional ones. As the electronic still cameras have spread, on the other hand, the users who enjoy themselves by displaying the electronic still images and moving images on the monitor screen of not only a personal computer but also a television set have increased.

In these circumstances, the user demands have been rising higher and higher not only for displaying the photographed still or moving images merely on the television set but also for seeing and hearing them "passively" like the television programs or for directing them or adding video/vocal effects to them like the television programs or movies.

A slide show display exists as a method for displaying digital image data consecutively without any operation of the user. A method for adding the effects to the display of the slide show has been disclosed in JP-A-2002-281450. In this publication, there is presented as an example of the related art a method for controlling the display switching effect in accordance with the display switching effect setting given in advance to a distributed still image, and there is also proposed a method for enabling the user to change the display switching effect freely into another.

### SUMMARY OF THE INVENTION

In order to give the slide show an efficient switching effect, the related art has required the producer of contents for the works to add the effects. On the other hand, what can be done by the user is to replace a switching effect control instruction of a still image by another instruction. In short, the related art has found it difficult to make the optimum display effect automatically or conveniently according to the contents of a photograph.

The invention has been conceived in view of the problems thus far described, and has an object to provide an image display method, by which the display effects of the case of displaying images by changing the image display modes in a time series can be made more effective for reflecting the contents of the image without requiring the user for any troublesome setting operations, a program for executing the image display method, and an image display device.

According to a first aspect of the invention, there is provided an image display method comprising the steps of: obtaining photographic information associated with image data; selecting a display mode of the image data on the basis of the photographic information obtained; and changing the display of the image data in accordance with the display mode selected.

According to a second mode of the invention, there is provided an image display method comprising the steps of: obtaining photographic information associated with image data; selecting a candidate for a display mode of the image data on the basis of the photographic information obtained; displaying information on the candidate for the display mode of the image data so that a user may be able to select the candidate for the display mode; and changing the display of the image data in accordance with the display mode selected.

The image display method of the invention can be circulated as such a program through storage medium such as disks or transmission media such as the internet, as is executed in a computer in a broad sense, e.g., a personal computer or a microprocessor of a television receiver device.

According to a third aspect of the invention, there is provided an image display device comprising: display means for displaying an image; image data obtaining means for obtaining image data; photographic information obtaining means for obtaining photographic information associatedwith the image data; displaymode selectingmeans for selecting a display mode corresponding to the photographic information; and display control means for changing the display of the image data in the display means in accordance with the display mode selected.

According to a fourth aspect of the invention, there is provided an image display device comprising: display means for displaying an image; image data obtaining means for obtaining image data; photographic information obtaining means for obtaining photographic information associated with the image data; display mode candidate selecting means for selecting a candidate for a display mode corresponding to the photographic information; and display control means for displaying such information in the display means as calls up a user to decide the display mode candidates selected, and for changing the display of the image data in the display means in accordance with the display mode selected.

According to the invention thus far provided, when the user peruses the image data taken with the photographic device, the user can give display effects suited for the contents of images on the basis of pieces of information associated with the individual image data.

### BRIEF DESCRIPTION OF THE DRAWINGS

Fig. 1 is a block diagram showing a construction of a television receiver according to a first embodiment of the invention;
Fig. 2 is a block diagram showing a remote control of the television receiver of the embodiment;
Fig. 3 is a chart showing a flow of the actions of a display control unit 110 in the first embodiment;
Fig. 4 is a diagram showing an example of an information table, which is used when the display control unit 110 in the first embodiment determines parameters of display effects;
Figs. 5A to 5F are diagrams showing display effect processing examples in the first embodiment;
Figs. 6A to 6D are diagrams showing examples of the actions in the first embodiment;
Fig. 7 is a chart showing a flow of the actions of a display control unit 110 in a third embodiment;
Fig. 8 is a diagram showing an example of an information table, which is used when the display control unit 110 in the third embodiment determines parameters of display effects;
Fig. 9 presents diagrams showing display effect processing examples in the third embodiment;
Fig. 10 is a chart showing a flow of the actions of the display control unit 110 in a fourth embodiment;
Fig. 11 is a diagram showing an example of an information table, which is used when the display control unit 110 in the fourth embodiment determines parameters of display effects;
Figs. 12A and 12B are diagrams showing display effect processing examples in the fourth embodiment; and
Fig. 13 presents schematic diagrams for explaining a photographic scene.

### DESCRIPTION OF THE PREFERRED EMBODIMENTS

### (First Embodiment)

### (Description of Individual Units)

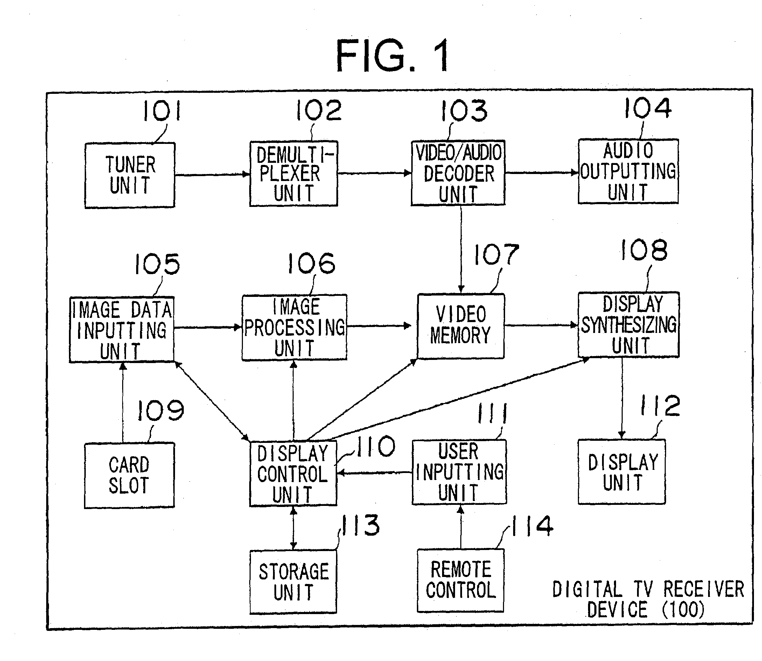

First of all, the first embodiment of the invention will be described. Fig. 1 shows a construction of a digital television receiver device 100, to which the invention is applied.

In Fig. 1, a signal is receivedby the not-shown antenna and applied to a tuner unit 101. This tuner unit 101 subjects the input signal to a processing such as demodulation and error correction to generate digital data of the format called the "transport stream". Moreover, the tuner unit 101 subjects the transport stream (TS) data generated to a descramble releasing treatment and outputs the processed data to a demultiplexer unit 102.

The demultiplexer unit 102 extracts video data and audio data from the TS data inputted from the tuner unit 101, in which video/audio data of a plurality of channels, electronic program guide (EPG) data, and data broadcasting data are time-shared and multiplexed, and outputs the video/audio data extracted to a video/audio decoder 103. The video data processed by the video/audio decoder 103 are written in a video memory 107 and outputted via a display synthesizing unit 108 to a display unit 112. On the other hand, the audio data are outputted to an audio outputting unit 104.

A card slot 109 is connected with a removable memory card or the like. In this embodiment, the card slot 109 is used for exchanging the data with a digital camera. An image data inputting unit 105 reads the digital image data from the memory card connected with the card slot 109. An image processing unit 106 subjects the digital image data inputted from the image data inputting unit 105, to an image processing, and writes the processed data in the video memory 107.

A display control unit 110 instructs: the image data inputting unit 105 to read images; the image processing unit 106 to execute the processing; the video memory 107 to write the display data; and the display synthesizing unit 108 to synthesize; and a storage unit 113 to store information. On the other hand, the display control unit 110 obtains the input data from a remote control 114 through a user inputting unit 111, and obtains the photographic data (or the related information) given in relation to the digital image data, through the image data inputting unit 105. In case the image display method of the invention is provided as a software program, on the other hand, this program is executed in the display control unit 110.

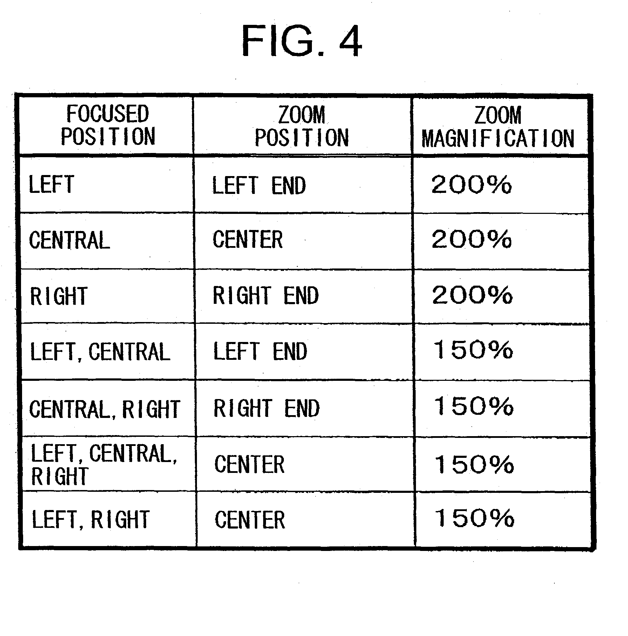

Here, the image data inputting unit 105 and the display control unit 110 correspond to image data obtaining means and photographic information obtaining means. On the other hand, a table (as referred to Fig. 4) stored in the storage unit 113 and the display control unit 110 correspond to display mode selecting means. Moreover, the display control unit 110 corresponds to display control means.

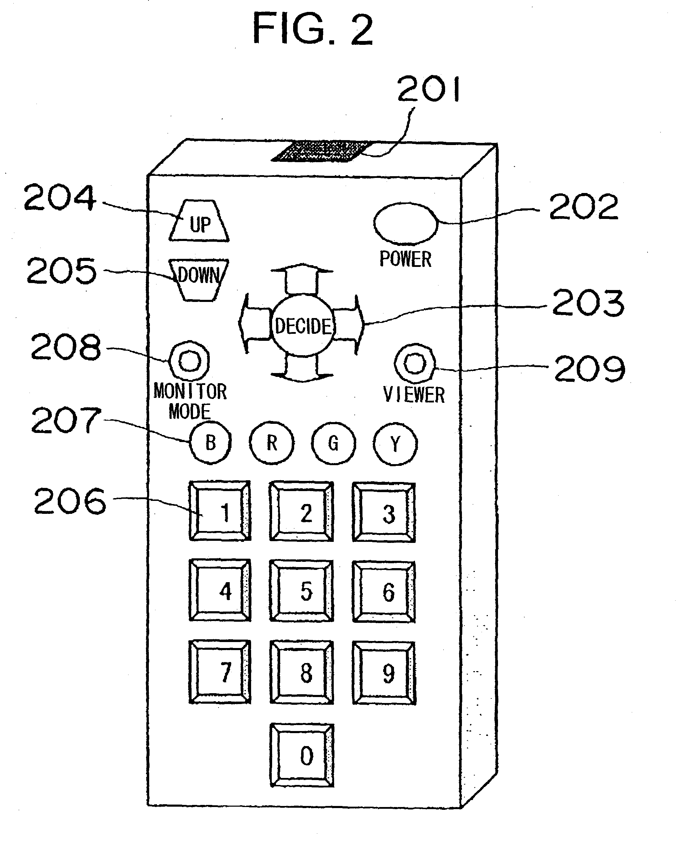

An example of the remote control 114 is shown in Fig. 2. Here, Fig. 2 shows only the buttons for the operations to realize the functions necessary for explaining this embodiment. However, these buttons are not identical to those necessary for the actual receiver device.

As shown in Fig. 2, the remote control 114 is provided with: a light emitting unit 201 for infrared communications with the user inputting unit (or the light receiving unit) 111 of the digital television receiver device 100; a power key 202 for turning ON/OFF the power source; a cursor & decide key 203 having a decide key arranged at the center of upward, downward, leftward and rightward buttons; an Up key 204; a Down key 205; numeral keys 206 having numerals 1 to 9 and 0 arranged in a matrix; and color keys 207 having buttons of four blue, red, green and yellow colors arranged in a row.

Moreover, the remote control 114 is further provided with a monitor mode key 208 for switching the display modes of the monitor of the digital television receiver device 100, and a view key 209 for calling image viewer functions.

The digital image used in this embodiment includes the data of a still image and a moving image taken by a digital camera (or a photographic device). The still image data used are JPEG-compressed by the digital camera and are then recorded as a still image data file in the memory card. The moving image data used are also JPEG-compressed at the unit of a frame by the digital camera and are then recorded as a moving image data file in the memory card. In the following description, the "image file" will indicate the still image data or the moving image data.

The picture-taking information is given in relation to the image data by the digital camera to each image file. The picture-taking information (the photographic information) includes not only the date/time of photography and the name of the camera but also the photographic scene mode, the focusedposition information indicating the focal point in the finder at the taking time, the stroboscopic state information, the information indicating the distance to an object, and the zoom state information.

The focused position information in the finder at the taking time in the digital camera used in this embodiment records any of "left", "center" and "right".

### (Description of Processing Operations)

The display of the digital image in the digital television receiver device 100 is started when the user inserts the memory card into the card slot 109 and calls the image viewer functions by the remote control operation.

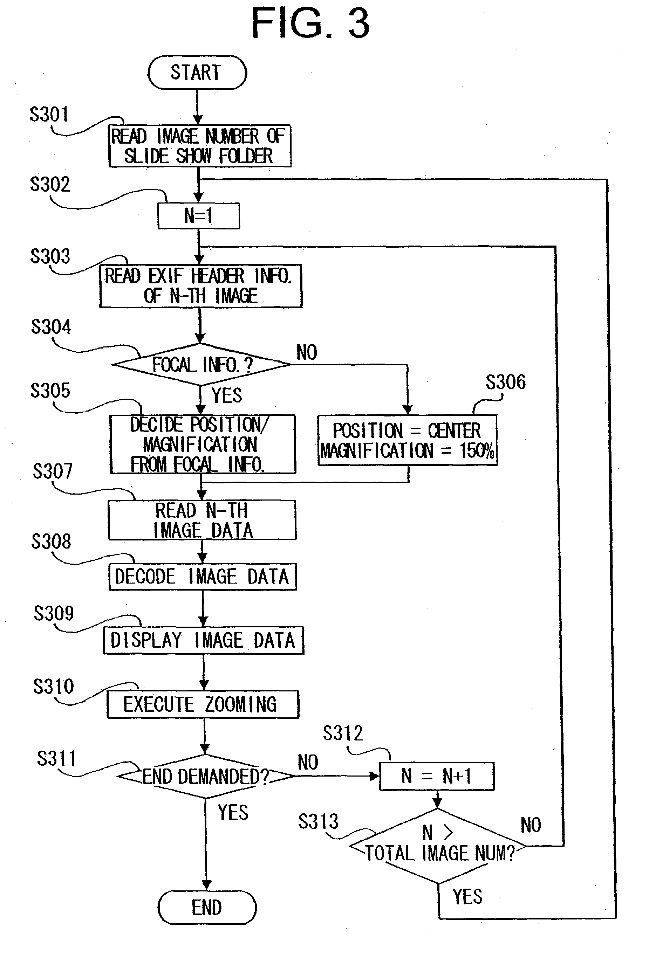

Fig. 3 is a diagram showing the partial operations of the image viewer functions in the digital television receiver device by centralizing the operations of the display control unit 110. The processing operations will be described with reference to Fig. 3.

### (Start of Slide Show)

When the user depresses the "viewer" key of the remote control shown in Fig. 2, the display control unit 110 starts the procedure shown in Fig. 3.

### (Decisions of Zoom Position/Magnification)

At first, the display control unit 110 reads and stores the total number of image files in the memory card inserted into the memory slot 109, through the image data inputting unit 105 (at S301). Next, the display control unit 110 reads the Exif header information of the first image file (at S302 and S303) .

In case the Exif header information of the image contains the "focused position information" (at S304), the display control unit 110 decides the zoom position and the zoom magnification according to the focused position information, by using the table shown in Fig. 4 (at S305). If the focused position information is "left", for example, it is decided according to the table of Fig. 4 that the zoom position is the "left end" and that the zoom magnification is "200 %". The table shown in Fig. 4 provides the information specifying the corresponding relation between the photographic information and the display mode of the image data.

In case the Exif header information of the image does not contain the "focusedposition information", on the other hand, it is decided that the zoom position is the "center" and that the zoom magnification is "150 %" (at S306).

The display control unit 110: reads the image data from the memory card through the image inputting unit 105 (at S307) ; sends the read data to the image processing unit 106 so that the data may be decoded (at S308); and then writes the display data in the video memory to display the image (at S309).

### (Zooming Display)

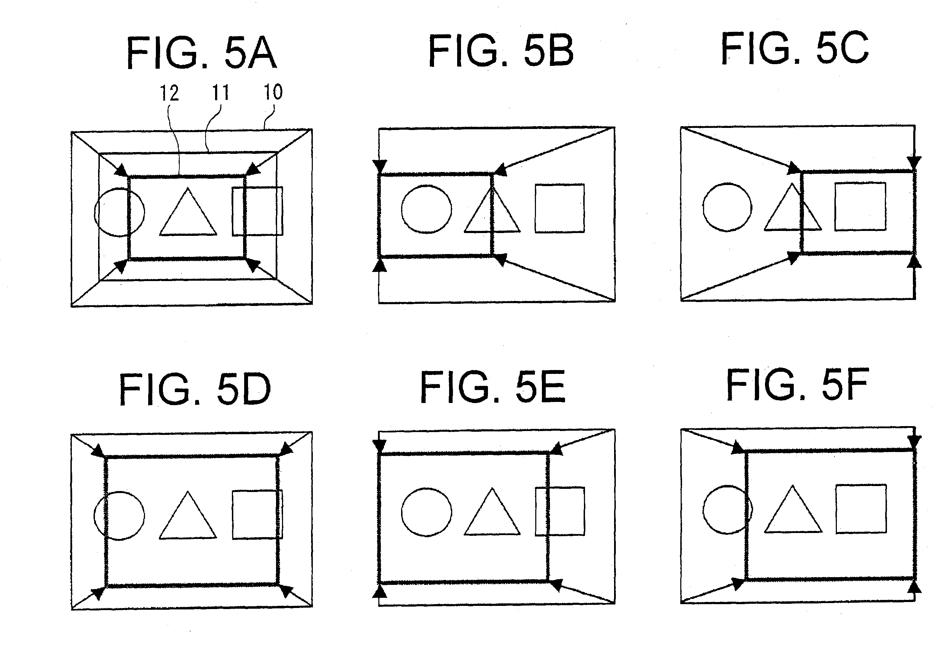

The display control unit 110 controls the display synthesizing unit 108 to execute a zooming display in accordance with the zoom position and the zoom magnification which were decided at the preceding operations (at S310). Fig. 5 is a diagram showing the behaviors of the image zooming operation performed by the display synthesizing unit 108.

In case it has been decided that the zoom position is the "center" and that the zoom magnification is "200 %", for example, the control is made, as shown in Fig. 5A, such that the whole image is displayed at first and such that the zooming is made gradually to the inner rectangle.

For example: a whole image 10 is displayed at first in a magnification of 100 %; a first partial image 11 is then enlarged by 150 % and displayed all over the screen; and a second partial image 12 is finally enlarged by 200 % and displayed all over the screen. In the display effect obtained, therefore, the central portion (i.e., the second partial image 12) of the entire image 10 is gradually (or stepwise) enlarged. Here has been described the two-step zooming, but the step number may be either one (that is, the entire image and the enlarged image are just switched) or two or more. As the step number is increased the more, the zooming becomes the smoother.

In case it has been decided that the zoom position is at the "left end" and that the zoom magnification is "200 %", on the other hand, the zooming is done, as shown in Fig. 5B.

In case it has been decided that the zoom position is at the "right end" and that the zoom magnification is "200 %", on the other hand, the zooming is done, as shown in Fig. 5C.

Likewise, the zooming operations are so performed as are shown in Fig. 5D in case the zoom position is at the "center" and the zoom magnification is "150 %", as are shown in Fig. 5E in case the zoom position is at the "left end" and the zoom magnification is "150 %", and as are shown in Fig. 5F in case the zoom position is at the "right end" and the zoom magnification is "150 %".

When the display control unit 110 ends the zooming operation of the first image, it performs similar operations on the second and later images.

### (Actions)

Here will be described the actions which are obtained by the operations of the display control unit 110 thus far described.

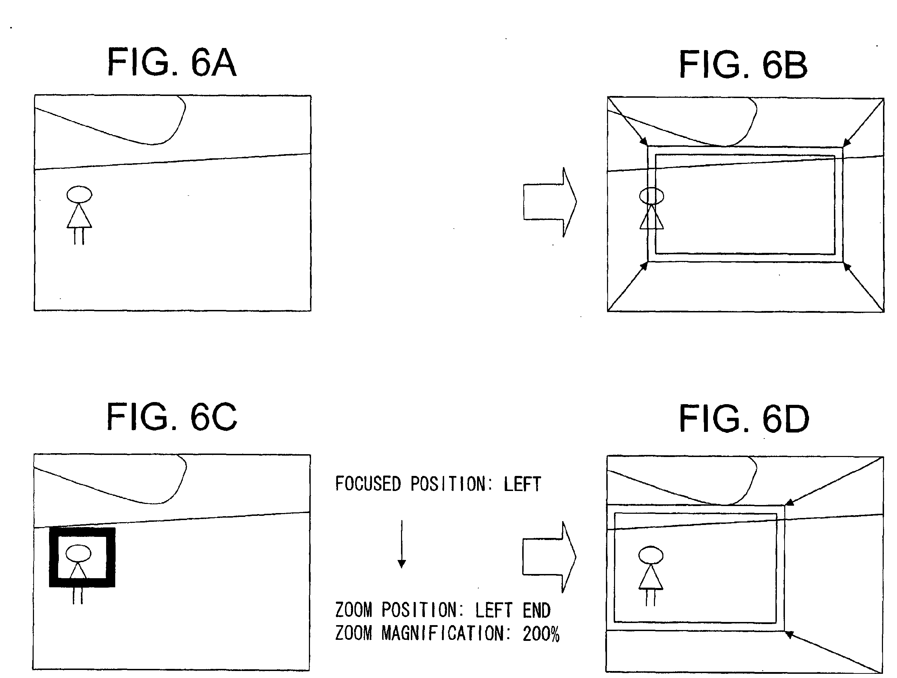

Fig. 6A presents one example of the digital image used in the embodiment of the invention. In this example, the object is located on the left side of the photograph. If the zooming is made with the zoom position being at the "center", the object is partially hidden at the end of the screen, as shown in Fig. 6B, so that the portion to interest the user is not displayed.

According to the operations of the display control unit 110 thus far described, it is decided from the table of Fig. 4 that the zoom position is the "left end" and that the zoom magnification is "200 %", in case the digital image contains the focused position information "left", as shown in Fig. 6C. As a result, the zooming operation is performed, as shown in Fig. 6D, so that the object can be displayed in the screen at all times.

It is usual that the user takes a photograph by focusing the object, and it is frequent that the focused position indicates the object the user is interested in. In case the focused position information is contained in the image data, the portion interesting the user can be gradually zoomed up while reflecting the focused position, so that a higher display effect can be obtained.

In case the focused position information is located at two positions such as "left" and "center", the zooming can be so made by lowering the magnification according to the control of the display control unit 110 in the embodiment that both the two areas may not bulge out the screen.

According to the first embodiment of the invention, more specifically, when the image data taken by the user with the digital camera are to be displayed in a slide show, the zooming operation can be so automatically performed on the basis of the information intrinsic to the photograph as to be more effectively suited for the photograph.

Here, the description thus far made is premised by the operation to gradually zoom in the image. It is, however, natural that the essence of the invention should not be limited to that zoom-in operation but may be modified to an operation to zoom out gradually from an enlarged display of a portion.

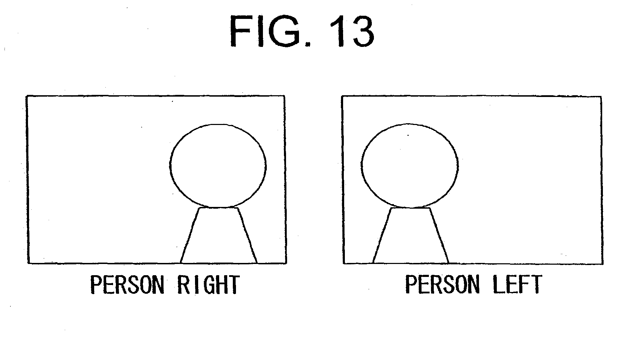

Moreover, the foregoing description has introduced the example using the information, i.e., the focused position information recorded at the taking time. However, the information on a photographic scene mode may also be used in case the photographic scene mode can be set by the digital camera as the mode, in which the object position or the focused position is fixed. For example, in case a photograph is taken with the digital camera having a photographic scene mode such as the "person right" and the "person left", as shown in Fig. 13, and in case the Exif header information of the image contains the information "person right", actions similar to the aforementioned ones can be obtained by making the zooming gradually toward the right side of the photography.

Moreover, the operation to change a display mode of one image data in a time series may be performed either automaticallyor so manually that the change is sequentially interruptedly each time the user depresses the button.

Moreover, the image display device may be integrated with the photographic device such as a digital video camera or a digital still camera.

These various kinds of modifications will apply the individual embodiments to be described hereinafter.

### (Second Embodiment)

The first embodiment thus far described is exemplified by amore effective zooming from the information such as the focused position information on the taking time contained in the Exif header information. According to the gist of the invention, however, it is natural that the zooming should not be limited to that example. In case the digital camera has a function to input a line of sight, for example, it is arbitrary to use the information on the line of sight.

For example, in case the information recorded in the Exif header information contains the information indicating that the line of sight of the photographer is located on the "left side" of the finder at the taking time, similar actions as those of the first embodiment can be obtained by performing the zooming operation to make a zooming gradually toward the left hand of the photograph.

### (Third Embodiment)

### (Description of Individual Units)

Here will be described a third embodiment of the invention. The construction of the digital television receiver device used in this embodiment is the same as that of Fig. 1 so that its description is omitted.

In this embodiment, too, there is used the digital image, which has been taken with a digital cameral like that used in the foregoing embodiments. Especially in the digital camera used in this embodiment, however, there are recorded the information on the date/time of photography, the information indicating the direction of the camera at the taking time (i.e., the wide/high photograph), and the setting of the photographic scene mode at the taking time, such as the "auto mode", the "landscape mode", the "person mode (portrait mode)" or the "night (i.e., night photography) mode".

### (Description of Processing Operations)

The display of the digital image in the digital television receiver device 100 is started when the user inserts the memory card into the card slot 109 and calls up the image viewer function by operating the remote control.

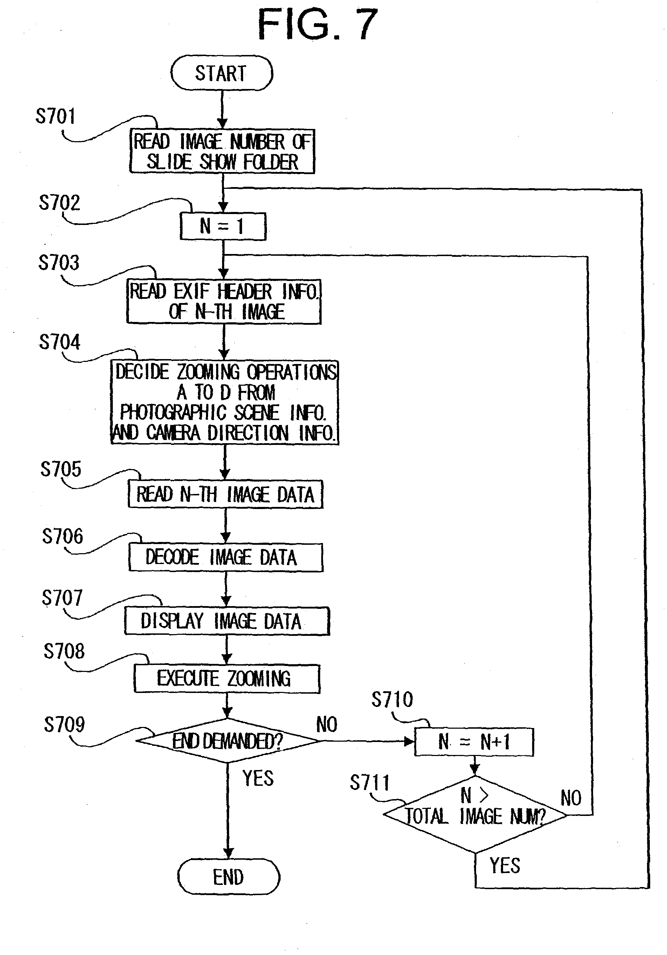

Fig. 7 is a chart showing the partial operations of the image viewer function in the digital television receiver device while centralizing the operations of the display control unit 110. The operations will be described with reference to Fig. 7.

### (Start of Slide Show)

When the user depresses the "viewer" key of the remote control 114 shown in Fig. 2, the display control unit 110 starts the operations shown in Fig. 7.

### (Display Effect Deciding Operation)

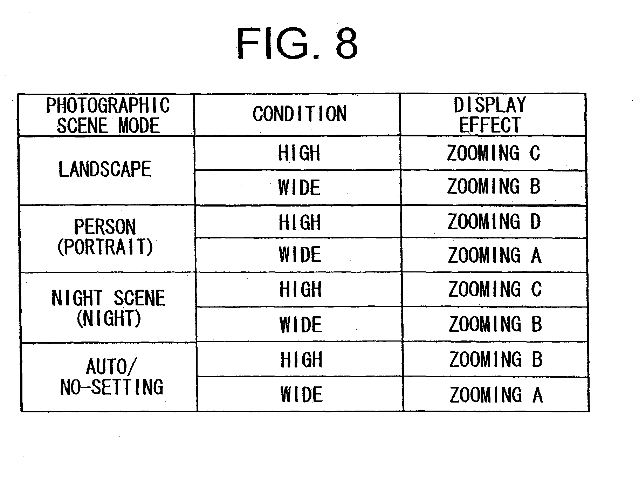

At first, the display control unit 110 reads and stores the total number of image files in the memory card inserted into the memory slot 109, through the image data inputting unit 105 (at S701). Next, the display control unit 110 reads the Exif header information of the first image file (at S702 and S703). In accordance with the contents of the "photographic scene mode information" and the "camera direction information" contained in the Exif header information, the display control unit 110 decides the display effect according to the photographic scene mode with the table shown in Fig. 8 (at S704).

Fig. 8 tabulates the decision results according to the individual conditions when the display control unit 110 decides the display effect.

For example, the display control unit 110 selects a zooming operation C in case the photographic scene mode of the image being processed is the "landscape" and in case the camera direction information, i.e., the image direction is "high".

In case the photographic scene mode of the image is the "person" and in case the image is "high", on the other hand, the display control unit 110 selects the zooming operation D.

The display control unit 110: reads the image data from the memory card through the image inputting unit 105 (at S705) ; sends the read data to the image processing unit 106 so that the data may be decoded (at S706); and then writes the display data in the video memory to display the image (at S707).

### (Zooming Display)

Next, the display control unit 110 controls the display synthesizing unit 108 to execute a zooming display in accordance with the zooming operations A to D decided in the preceding operations (at S708).

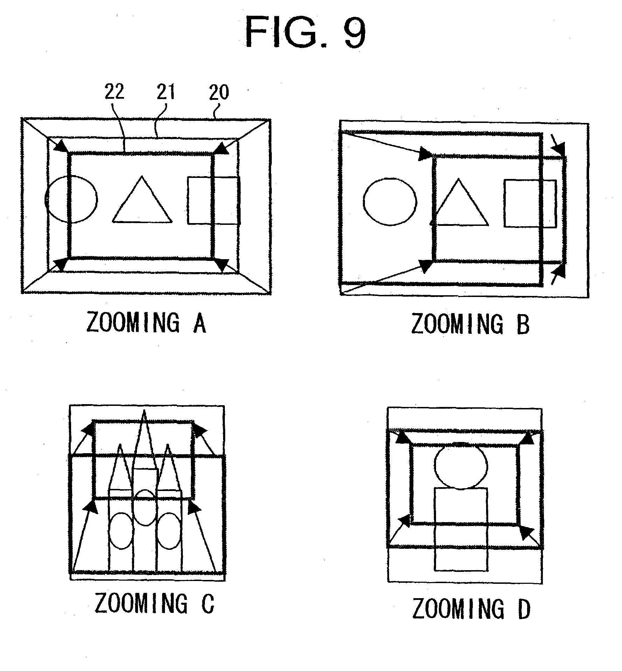

Fig. 9 presents diagrams showing the changes in the display areas to the images according to the zooming operations A to D.

In the zooming operation A, for example, the control is made such that the zooming is made gradually from the whole image display toward the center up to the smaller rectangular area display. Specifically: a whole image 20 is displayed at first in a magnification of 100 %; a first partial image 21 is then enlarged and displayed all over the screen; and a second partial image 22 is finally enlarged and displayed all over the screen. Here has been described the two-step zooming, but the step number may be either one, or two or more. In the zooming operation B, the control is made such that the zooming is made gradually from the larger rectangular area on the left side to the smaller rectangular area on the right side. In the zooming operation C, on the other hand, moreover, the control is made such that the zooming is made gradually from the larger rectangular area on the lower side to the smaller rectangular area on the upper side. In the zooming operation D, on the other hand, moreover, the control is made such that the zooming is made gradually from the larger rectangular area on the outer side to the smaller rectangular area on the inner side.

When the display control unit 110 ends the zooming operation of the first image, it performs similar operations on the second and later images (at S710).

### (Actions)

Here will be described the actions which are obtained by the operations of the display control unit 110 in this embodiment thus far described.

In case the image being displayed is the "landscape" photograph and "wide", the zooming operation is performed, as shown in the zooming operation B of Fig. 9. Generally, the wide landscape photograph frequently has an object of a wide landscape as a whole. Therefore, the display effect can be made the better without deteriorating the width of the landscape, as the landscape is panned the more as in the zooming operation B with the zoom magnification which is not enlarged so much.

In case the image is the "landscape" photograph and "high", the display control unit 110 performs the zooming operation, as shown in the zooming operation C of Fig. 9. The high landscape photograph generally takes a high building or a distant landscape together with a river flowing close to the feet. In this case, the display effect emphasizing the expression of the height or depth can be obtained by zooming upward from the lower portion.

In case the image is the "person" photograph and "high", on the other hand, the face of the person is generally located in the upper area than the center. In this case, the zooming display can be made without any defect such as a partial cut of the face by zooming while always displaying that portion, as in the zooming operation D shown in Fig. 9.

### (Fourth Embodiment)

### (Description of Individual Units)

Here will be described a fourth embodiment of the invention. The construction of the digital television receiver device used in this embodiment is the same as that of Fig. 1 so that its description is omitted.

In this embodiment, too, there is used the digital image, which has been taken with a digital cameral like that used in the foregoing embodiments. Especially in the digital camera used in this embodiment, however, there are recorded the information on the date/time of photography, the information on the depth of field at the taking time, the information on the presence/absence of a flash illumination, and the setting of the photographic scene mode at the taking time, such as the "auto mode", the "landscape mode", the "person mode (portrait mode)" or the "night (i.e., night photograph) mode".

### (Description of Processing Operations)

The display of the digital image in the digital television receiver device 100 is started when the user inserts the memory card into the card slot 109 and calls up the image viewer function by operating the remote control.

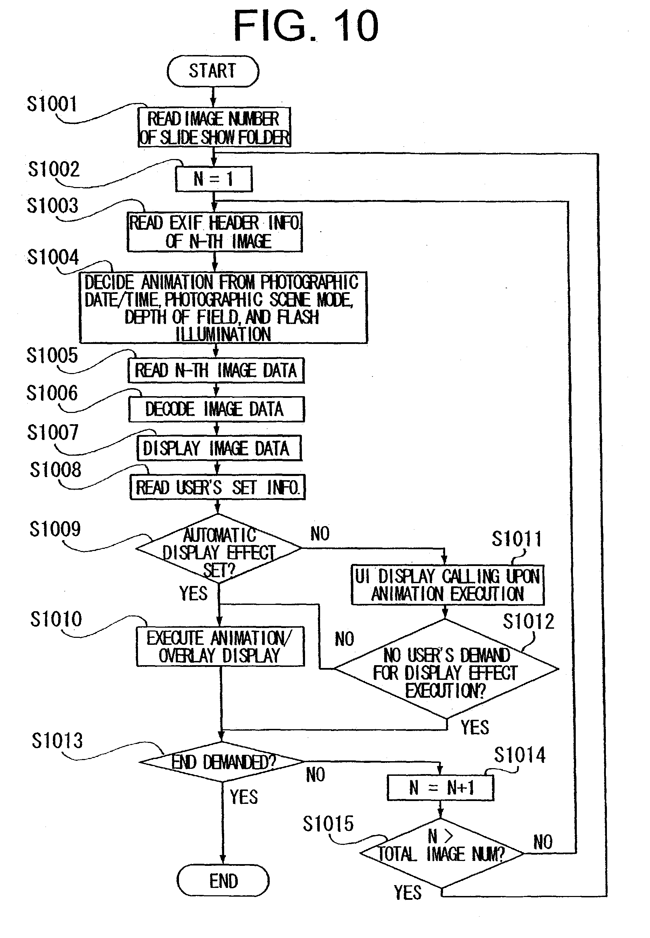

Fig. 10 is a chart showing the partial operations of the image viewer function in the digital television receiver device while centralizing the operations of the display control unit 110. The operations will be described with reference to Fig. 10.

### (Start of Slide Show)

When the user depresses the "viewer" key of the remote control shown in Fig. 2, the display control unit 110 starts the operations shown in Fig. 10.

### (Display Effect Deciding Operation)

At first, the display control unit 110 reads and stores the total number of image files in the memory card inserted into the memory slot 109, through the image data inputting unit 105 (at S1001). Next, the display control unit 110 reads the Exif header information of the first image file (at S1002 and S1003).

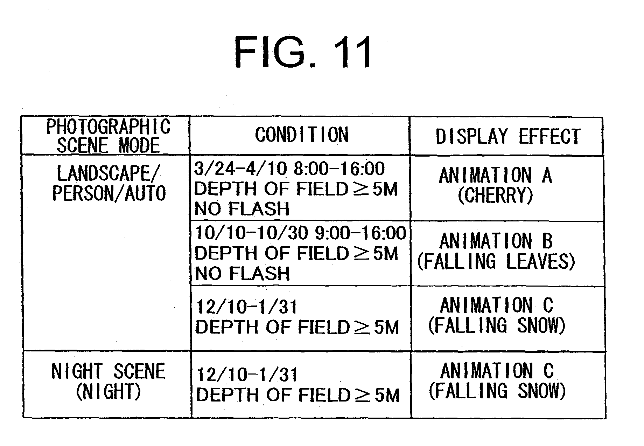

In accordance with the contents of the "photographic scene mode information", the "field depth information", the "flash illumination information" and the "photographic date/time information" contained in the Exif header information, the display control unit 110 then decides the display effect according to the photographic scene mode with the table shown in Fig. 11 (at S1004).

Fig. 11 tabulates the decision results according to the individual conditions when the display control unit 110 decides the display effect. Specifically, the table shown in Fig. 11 exemplifies the information specifying the corresponding relations between the photographic information (i.e., the "photographic scene mode information", the "field depth information", the "flash illumination information" and the photographic date/time information") and the display mode (i.e., the "display effect").

For example, the display control unit 110 selects an animation operation A in case the photographic scene mode of an image being processed is the "landscape" and in case the image is taken in the day time of April 1 at a depth of field of 15 m and under the condition of no flash illumination.

In case the photographic scene mode of the image the "night scene" and in case the image is taken on December 25 and under the condition of a depth of field of 20 m, on the other hand, the display control unit 110 selects an animation operation C.

The display control unit 110: reads the image data from the memory card through the image inputting unit 105 (at S1005); sends the read data to the image processing unit 106 so that the data may be decoded (at S1006) ; and then writes the display data in the video memory 107 to display the image (at S1007).

### (Automatic Effect Processing)

Next, the display control unit 110 reads the information preset by the user, and confirms whether or not an automatic display effect has been set in the information (at S1008).

In case the automatic display effect is "set" (at S1009), an animation overlay display is executed on the image being displayed (at S1010) if the animation operation was selected in the preceding operation.

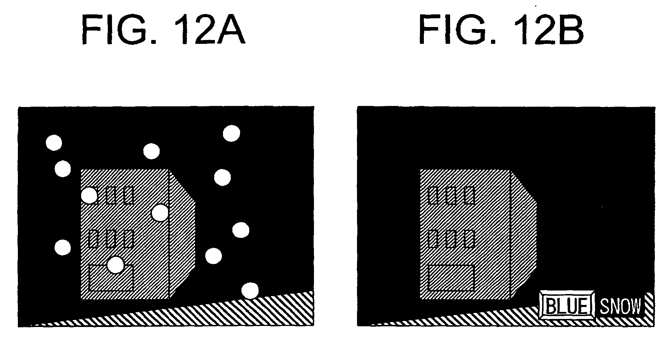

For example, in case the animation operation C is selected, the display control unit 110 controls the video memory 107 and the display synthesizing unit 108 to overlay such an animation on the image being displayed that snow is falling, as shown in Fig. 12A.

### (Display of Display Effect Icon)

In case the automatic display effect is "not set", on the other hand, a display is made to call upon the user to make an animation overlaid display (at S1011), as shown in Fig. 12B, if the animation operation was selected at the preceding operation of S1004. Fig. 12B shows that the display effect of the animation of "snow" can be executed by depressing the blue button. When the blue button is actually depressed by the user (at S1012), moreover, the animation overlay operation of the "snow" is executed on the image being displayed (at S1010), as has been described hereinbefore. Here, the table shown in Fig. 11 and the display control unit 110 correspond to display candidate selecting means. Moreover, the blue button displayed on the screen corresponds to the information demanding the decision on whether or not the animation overlay operation or the candidate for the display mode is to be selected.

### (Actions)

Here will be described the actions by the operations of the display control unit 110 thus far described.

By the operation of the display control unit 110, the animation shown in Fig. 12A can be overlaid on the image satisfying a predetermined condition for the Exif information.

For example, in case the displayed image was a landscape photograph and was taken in the daytime of April 1, cherry blossoms are generally blooming in Japan, so that the photograph relates highlyprobably to the cherry blossom viewing. Even if the photograph has no direct relation to the cherry blossom viewing, it relates highly probably to the photograph which has been taken in such a scene of a ceremony of entrance to a preschool or a school as seems to have a general relation to the "cherry". By applying the display effect of the falling "cherry" to the photograph of such scene, the user is enabled to receive a deeper impression from the photograph than that obtained from the mere display of the image. According to the operation of the display control unit 110 of this embodiment, the animation of the cherry blossoms falling down can be overlaid either automatically or by the single button operation on that photograph.

In case the displayed image was a night scene photograph and was taken on December 25, snow fall is generally in season at many places in Japan. It is, therefore, highly probable that snow was falling at the taking time. According to the operation of the display control unit 110 of this embodiment, the animation of the snow falling down can be overlaid either automatically or by the single button operation on that photograph. By applying such display effect, the user is enabled to receive a deeper impression from that photograph.

Here in the operation of S1004 of Fig. 10 and the table shown in Fig. 11, the animation overlay is done only on the photograph of a large depth (e.g., 5 m or more) of field. The reason for this animation overlay is explained in the following. If the animation of falling cherry blossoms or snow is overlaid on the photograph having a relatively small depth of field, the cherry blossoms or snow do not look falling in the depth of the object so that the feeling of depth is lost to give the high display effect. Moreover, the animation is overlaid on only the photograph having no flash illumination. This is likewise because the photograph with the flash illumination was generally taken indoors or because the object was frequently within a relatively short range (because of the prevention of a back light).

With these display controls, the display effects can be obtained according to the season or situations of taking the photograph.

In the example of Fig. 12A, moreover, all the flakes of snow are expressed with the same size. In the actually adopting case, however, it is preferred that the cherry blossoms or the snow flakes are displayed with mixed sizes in the animation. Thus, the feeling of depth can be more given to the photograph than without the animation display.

### (Fifth Embodiment)

In the third embodiment, a more effective animation has been selected from the pieces of Exif header information such as the photographic date/time information, the photographic scene mode information, the field depth information or the flash illumination information. In view of the gist of the invention, however, the effective animation should not be limited to the enumerated pieces of information. For example, in case the digital camera can record the photographic location information from the GPS, an effective animation may also be selected from that information.

For example, if it is understood from the information recorded in the Exif header information that the taking place is located around Sapporo City, it is also understood that the snow falling season is longer than those of other areas in Japan. For example, the condition for selecting the animation C of Fig. 11 can be extended from "12/10 to 1/31" to "11/10 to 2/30".

According to the image display method and the image display device of the invention, as has been detailed hereinbefore, the display effects of the case of displaying the images consecutively can be made more effective for reflecting the contents of the image without requiring the user for any troublesome setting operations.

The present invention can be implemented by a computer program controlling a processor of an image display device. An aspect of the present invention thus provides a storage medium storing processor implementable instructions for controlling a processor to carry out the method as hereinabove described.

## Claims

1. An image display method comprising the steps of:
obtaining photographic information associated with image data;
selecting a display mode of said image data on the basis of said photographic information obtained; and
changing the display of said image data in accordance with said display mode selected.

2. An image display method comprising the steps of:
obtaining photographic information associated with image data;
selecting a candidate for a display mode of said image dataonthebasisofsaidphotographicinformationobtained;
displaying information on said candidate for said display mode of said image data so that a user may be able to select said candidate for said display mode; and
changing the display of said image data in accordance with said display mode selected.

3. An image display method according to Claim 1,
wherein said photographic information is the information which was recorded in association with said image data when the image contained in said image data was taken by a photographic device.

4. An image display method according to Claim 3,
wherein said photographic information contains at least one of the information on the photographic date/time, the information on a focused position, the information on the line of sight of the photographer, the information on the mode of photography, the information on the position of the taking place, the information on the direction of the photographic device, the information on the depth of field, and the information on the presence/absence of flash illumination at the taking time.

5. An image display method according to Claim 4,
wherein said display mode includes a mode of zooming in a portion of the image, a mode of zooming out from a portion of the image, or a mode of synthesizing and displaying an animation in the image.

6. An image display method according to Claim 2,
wherein said photographic information is the information which was recorded in association with said image data when the image contained in said image data was taken by a photographic device.

7. An image display method according to Claim 6,
wherein said photographic information contains at least one of the information on the photographic date/time, the information on a focused position, the information on the line of sight of the photographer, the information on the mode of photography, the information on the position of the taking place, the information on the direction of the photographic device, the information on the depth of field, and the information on the presence/absence of flash illumination at the taking time.

8. An image display method according to Claim 7,
wherein said display mode includes a mode of zooming in a portion of the image, a mode of zooming out from a portion of the image, or a mode of synthesizing and displaying an animation in the image.

9. A program for displaying image data, comprising the steps of:
obtaining photographic information associated with image data;
selecting a display mode of said image data on the basis of said photographic information obtained; and
changing the display of said image data in accordance with said display mode selected.

10. A program for displaying image data, comprising the steps of:
obtaining photographic information associated with image data;
selecting a candidate for a display mode of said image data on the basis of saidphotographic information obtained;
displaying information on said candidate for said display mode of said image data so that a user may be able to select said candidate for said display mode; and
changing the display of said image data in accordance with said display mode selected.

11. An image display device comprising:
display means for displaying an image;
image data obtaining means for obtaining image data;
photographic information obtaining means for obtaining photographic information associated with the image data;
display mode selecting means for selecting a display mode corresponding to said photographic information; and
display control means for changing the display of said image data in said display means in accordance with said display mode selected.

12. An image display device comprising:
display means for displaying an image;
image data obtaining means for obtaining image data;
photographic information obtaining means for obtaining photographic information associated with the image data;
display mode candidate selecting means for selecting a candidate for a display mode corresponding to said photographic information; and
display control means for displaying such information in said display means as calls up a user to decide said display mode candidates selected, and for changing the display of said image data in said display means in accordance with said display mode selected.

13. A method of displaying images comprising receiving an input of image data recorded by a camera and representing an image and meta data associated with the image data, the meta data being recorded by the camera when recording the image data;
processing the meta data to determine effects processing to be applied to the image data; and
applying the effects processing to the image data for displaying the image with special effects determined by the meta data.

14. A storage medium storing a computer program for controlling an image display device to carry out all of the steps of a method as claimed in any one of claims 1 to 8 and 13.
